# EUROPÄISCHE PATENTSCHRIFT

(11) **EP 0 912 287 B1**
(45) Veröffentlichungstag und Bekanntmachung des Hinweises auf die Patenterteilung: **27.02.2002**
(21) Anmeldenummer: 97917930.6
(22) Anmeldetag: 30.04.1997
(51) Int. Cl.: B23K 9/12

(54) **SCHWEISSBRENNER MIT EINER KONTAKTBUCHSE UND EINER ZUFUHRVORRICHTUNG**
WELDING TORCH WITH A CONTACT SOCKET AND A FEED DEVICE
CHALUMEAU MUNI D'UNE DOUILLE DE CONTACT ET D'UN DISPOSITIF D'ALIMENTATION

(30) Priorität: 02.05.1996 AT 24896
(43) Veröffentlichungstag der Anmeldung: 06.05.1999
(73) Patentinhaber: FRONIUS Schweissmaschinen Produktion GmbH & Co. KG, 4643 Pettenbach (AT)
(72) Erfinder: WIMROITHER, Walter, 4562 Steinbach (AT)
(74) Vertreter: Secklehner, Günter, Dr.
(86) Internationale Anmeldenummer: AT9700086
(87) Internationale Veröffentlichungsnummer: WO9741992

(56) Entgegenhaltungen:
- DE-A- 4 410 370
- FR-A- 2 349 389
- GB-A- 2 074 069
- US-A- 1 959 180

## Beschreibung

Die Erfindung betrifft einen Schweißbrenner mit einer Kontaktbuchse und einer Zufuhrvorrichtung, wie im Oberbegriff des Anspruches 1 beschrieben.

Aus der GB 2 074 069 A ist eine Schweißbrenner mit einer Kontaktbuchse und einer Zufuhrvorrichtung bekannt, wobei die Zufuhrvorrichtung für einen Schweißdraht angeordnet ist, die den Schweißdraht schräg zu einer Bohrung der Kontaktbuchse derart ablenkt, daß eine Außenfläche des Schweißdrahtes an einer definierten Innenfläche der Bohrung zumindest über einen Teilbereich der Bohrung zur Anlage kommt. Die schräge Zuführung des Schweißdrahtes wird derart bewirkt, daß im Übergangsstück zwischen der Zufuhrvorrichtung und der Kontaktbuchse Einbuchtungen bzw. Einkerbungen vorgesehen sind, die den im Zentrum der Bohrung des Übergangsstückes verlaufenden Schweißdraht ablenken, sodaß der Schweißdraht schräg in die Bohrung der Kontaktbuchse eingeführt wird. Nachteilig ist bei der beschriebenen Ausführung, daß durch die Ausbildung der Einbuchtungen bzw. Einkerbungen Reibstellen im Übergangsstück auftreten, wodurch eine Verletzung der Oberfläche bzw. ein Materialabrieb des Schweißdrahtes im Übergangsstück entsteht.

Weiters ist aus der US 1 959 180 A eine spezielle Ausbildung eines Endrohres bzw. einer Kontaktbuchse eines Schweißbrenners gezeigt. Bei diesem sind Öffnungen bzw. Ausnehmungen angeordnet, über die durch Druckbeaufschlagung eines Gegenstückes eine definierte Kontaktfläche am Schweißdraht geschaffen wird. Nachteilig ist hierbei, daß durch die spezielle Ausbildung der Kontaktbuchse mit beweglichen Teilen ein hoher Herstellungsaufwand entsteht, wodurch die Kosten eines derartigen Kontaktrohres wesentlich erhöht werden.

Es sind bereits verschiedenste Schweißbrenner mit Kontaktbuchsen bekannt, bei denen eine Zwangskontaktierung des Schweißdrahtes mit der Kontaktbuchse durch eine spezielle Ausbildung der Kontaktbuchse erreicht wird. Dabei ist beispielsweise gemäß der DE 44 10 370 A1 eine Zwangskontaktierung des Schweißdrahtes mit der Kontaktbuchse bekannt, bei der die Kontaktbuchse über einen Teil ihrer Länge eine Aussparung ausweist und in die Aussparung ein der Aussparung angepaßtes Kontaktstück eingesetzt wird. Das Kontaktstück wird über eine Federspannung an den Schweißdraht angedrückt, sodaß eine Zwangskontaktierung des Kontaktstückes mit dem Schweißdraht erfolgt. Nachteilig ist hierbei, daß ein hoher Fertigungsaufwand und somit hohe Kosten für die Herstellung der Kontaktbuchse anfallen und bei Verringerung der Federspannung eine einwandfreie Kontaktierung nicht gewährleistet ist.

Der vorliegenden Erfindung liegt die Aufgabe zugrunde, einen Schweißbrenner mit einer Kontaktbuchse und einer Zufuhrvorrichtung zu schaffen, bei der eine Zwangskontaktierung des Schweißdrahtes in der Kontaktbuchse erfolgt, wobei handelsübliche Kontaktbuchsen eingesetzt werden können.

Diese Aufgabe der Erfindung wird durch die Merkmale des Anspruches 1 gelöst. Der überraschende Vorteil dieser scheinbar einfachen Lösung liegt darin, daß durch die winkelige Zufuhr des Schweißdrahtes zu der Bohrung der Kontaktbuchse eine definierte Kontaktfläche in der Kontaktbuchse geschaffen wird, sodaß eine Zwangskontaktierung des Schweißdrahtes mit der Kontaktbuchse gegeben ist. Ein weiterer nicht vorhersehbarer Vorteil liegt darin, daß bei Verwendung eines Schweißdrahtes mit geringer Dressur und/oder Federkonstante immer eine Zwangskontaktierung des Schweißdrahtes mit der Kontaktbuchse gewährleistet ist.

Die Ausbildungen nach den Ansprüchen 2 bis 10 sind vorteilhaft, da dadurch eine einfache Anpassung an die unterschiedlichsten Durchmesser des Schweißdrahtes möglich ist.

Vorteilhaft ist auch eine Ausgestaltung nach den Ansprüchen 11 bis 14, da dadurch ein nahtloser Übergang des Schweißdrahtes von der Zufuhrvorrichtung in die Kontaktbuchse gewährleistet ist.

Es sind aber auch Ausführungen nach den Ansprüchen 14 bis 19 möglich, da dadurch eine kostengünstige Herstellung des Schweißbrenners erreicht wird.

Bei den Ausführungsvarianten nach den Ansprüchen 20 bis 23 ist von Vorteil, daß ein zum Stand der Technik zählender Schweißbrenner verwendet werden kann, wobei aufgrund der winkelig angeordneten Bohrung der Kontaktbuchse wiederum zumindest eine Kontaktfläche zwischen dem Schweißdraht und der Oberfläche der Bohrung der Kontaktbuchse geschaffen wird, sodaß eine Zwangskontaktierung des Schweißdrahtes gewährleistet ist.

Es sind auch Ausgestaltungen nach den Ansprüchen 24 bis 27 von Vorteil, da durch die Umlenkung des Schweißdrahtes wiederum eine winkelige Zufuhr des Schweißdrahtes zur Kontaktbuchse erreicht wird, sodaß in der Bohrung der Kontaktbuchse eine definierte Kontaktfläche für die Zwangskontaktierung des Schweißdrahtes geschaffen wird.

Es sind auch Ausgestaltungen nach den Ansprüchen 28 bis 32 von Vorteil, da durch die Anordnung einer winkelig verlaufende Fläche vor der Kontaktbuchse der Schweißdraht derart abgelenkt wird, daß sich beim Eintritt in die Bohrung der Kontaktbuchse sich zumindest eine definierte Kontaktfläche bildet.

Weitere vorteilhafte Ausbildungen sind in den Ansprüchen 33 bis 38 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:
- Fig. 1: einen erfindungsgemäßen Schweißbrenner, in Seitenansicht und teilweise geschnitten;
- Fig. 2: den Schweißbrenner nach Fig. 1, in Seitenansicht, geschnitten und in vereinfachter schematischer Darstellung;
- Fig. 3: eine Stirnansicht des Schweißbrenners, geschnitten und in vereinfachter schematischer Darstellung;
- Fig. 4: einen Teilbereich eines anderen Schweißbrenners, in Seitenansicht, geschnitten;
- Fig. 5: einen Teilbereich eines anderen Schweißbrenners, in Seitenansicht, geschnitten;
- Fig. 6: einen Handschweißbrenner, in Seitenansicht und teilweise geschnitten;
- Fig. 7: einen Teilbereich des Schweißbrenners nach Fig. 6, in Seitenansicht, geschnitten und in vereinfacht schematischer Darstellung;
- Fig. 8: einen Teilbereich eines anderen Schweißbrenners, in Seitenansicht geschnitten

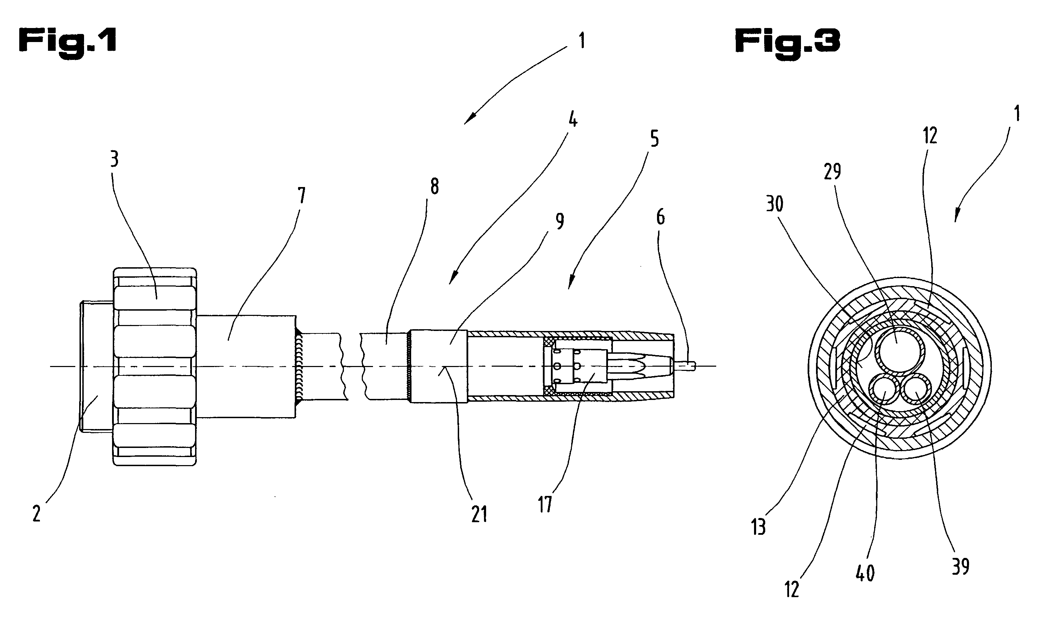

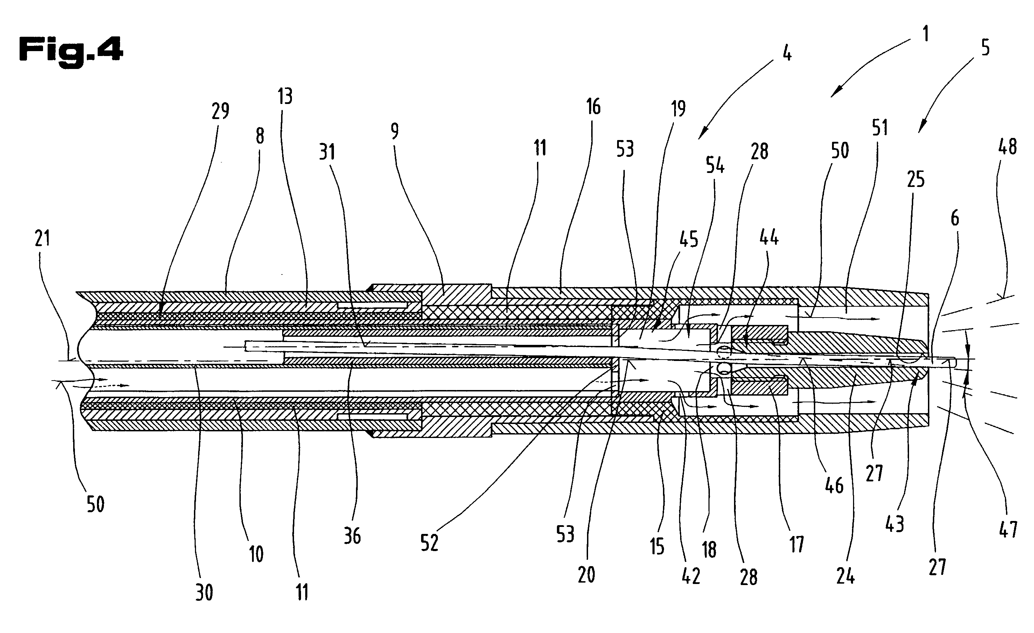

Die Schweißbrenner gemäß Fig. 4-8 sind nicht gegenstand vorliegender Erfinding. In den Figuren 1 bis 3 ist ein Schweißbrenner 1 beispielsweise zum MIG/MAG-Schweißen gezeigt, wobei der Schweißbrenner 1 für einen Schweißroboter ausgebildet ist.

Der Schweißbrenner 1 besteht dabei aus einem Versorgungsstück 2 mittels dem der Schweißbrenner 1 über ein Schlauchpaket an einem Schweißgerät bzw. einer Schweißstromquelle angeschlossen ist und gleichzeitig die Funktion aufweist, den Strom vom Schweißgerät bzw. von der Schweißstromquelle in den Schweißbrenner 1 zu leiten. Anschließend an das Versorgungsstück 2 wird ein Isolationsring 3 angeordnet, damit der vordere Teil des Schweißbrenners 1 vom Versorgungsstück 2 isoliert ist und somit kein Strom auf den Außenflächen des Schweißbrenners 1 fließen kann. Der Strom, der über das Versorgungsstück 2 zum Schweißbrenner 1 geführt wird, wird innerhalb einer Außenummantelung 4 zum Endbereich 5 des Schweißbrenners 1 geleitet und vom Endbereich 5 an einem Schweißdraht 6 übergeben.

Die Außenummantelung 4 kann dabei aus mehreren Einzelteilen 7 bis 9 gebildet werden, wobei die Außenummantelung 4 bevorzugt als Stahlrohr ausgebildet ist. Der Schweißbrenner 1 kann dabei mit dem vorgesehenen Einzelteil 7 an einem Arm eines Schweißroboters befestigt werden.

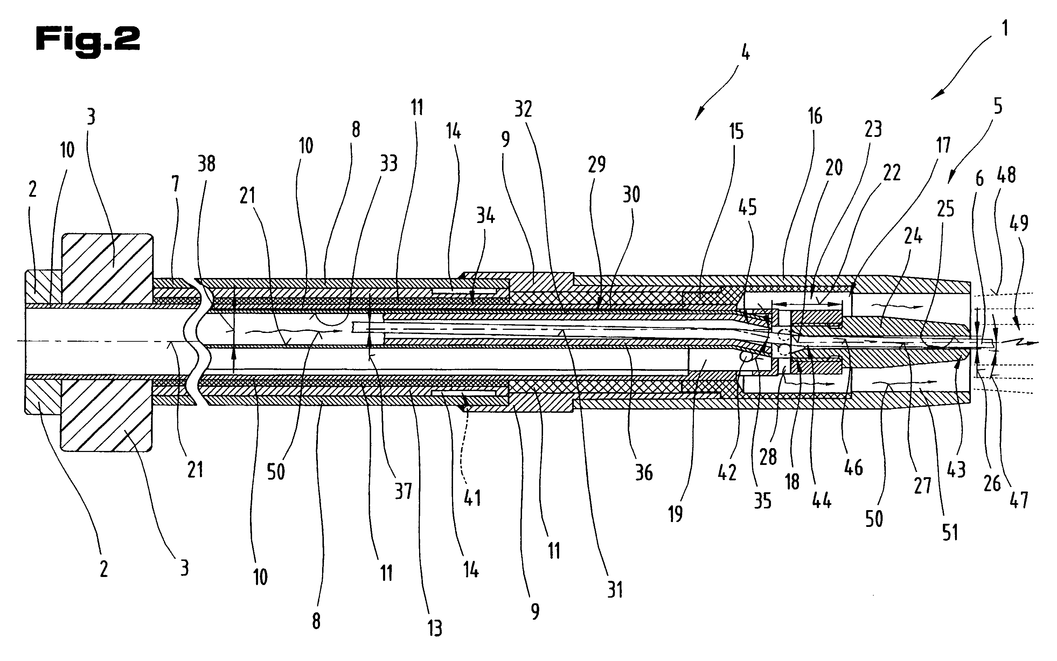

Wie nun besser aus Fig. 2 ersichtlich ist, wird das Versorgungsstück 2 mit einem Versorgungsrohr 10 verbunden bzw. kontaktiert, sodaß beim Anstecken des Schweißbrenners 1 an das Schweißgerät bzw. an die Schweißstromquelle der Strom über das Versorgungsstück 2 an das Versorgungsrohr 10 weitergeleitet wird. Das Versorgungsrohr 10 kann dabei beispielsweise aus einem Kupferrohr gebildet werden. Auf das Versorgungsrohr 10 wird nunmehr eine Isolationsschicht 11, die sich vom Isolationsring 3 bis zum Endbereich 5 des Schweißbrenners 1 erstreckt, aufgebracht, sodaß das Versorgungsrohr 10 nach außen vollständig mit dieser Isolationsschicht 11 umgeben ist. Selbstverständlich ist es möglich, daß anstelle der Isolationsschicht 11 ein Isolationsrohr über das Versorgungsrohr 10 gestülpt werden kann.

Um eine bessere Kühlung des Schweißbrenners 1 zu erreichen, kann beispielsweise auf die Isolationsschicht 11 über einen Teilbereich des Schweißbrenners 1 ein mit einzelnen in Längsrichtung verlaufenden Nuten 12 versehenes Kühlungsrohr 13 angeordnet sein, wodurch eine bessere Kühlung des Schweißbrenners 1 bzw. der Außenummantelung 4 erreicht wird. Das Kühlungsrohr 13 weist dabei im Endbereich eine um ihren Umfang umlaufende Nut 14 auf, sodaß das in den einzelnen Nuten 12, insbesondere in jeder zweiten Nut 12 eingedrückte Wasser bzw. Luft, in den restlichen Nuten 12 wieder ausströmen kann. Auf das Kühlungsrohr 13 bzw. auf die Isolationsschicht 11 wird nun die Außenummantelung 4 angeordnet, sodaß ein fester Halt der einzelnen Schichten bzw. Rohraufbauten hergestellt wird. Der Einzelteil 9 der Außenummantelung 4 weist im Endbereich ein innenliegendes Gewinde auf, sodaß eine mit einem an der Außenseite aufweisendes Gewinde versehene Isolationsstück 15 befestigt werden kann. Anschließend kann über das Isolationsstück 15 und einem Teilbereich des Einzelteils 9 eine Gasdüse 16 aufgesteckt werden.

Weiters ist im Endbereich 5 des Schweißbrenners 1 ein Übergangsstück 17 mit dem Versorgungsrohr 10 verbunden. Das Verbinden des Übergangsstücks 17 mit dem Versorgungsrohr 10 kann dabei durch Verlöten,Verschweißen, Kleben oder Verschrauben erfolgen. Das Übergangsstück 17 weist dabei zwei unterschiedliche Bohrungen 18, 19 auf. Die Bohrung 18 ist mit ihrer Mittelachse 20, die im Zentrum der Bohrung 18 verläuft, fluchtend mit einer Längsmittelachse 21, die im Zentrum des Schweißbrenners 1 verläuft, positioniert. Die Bohrung 18 des Übergangsstückes 17 erstreckt sich dabei über einen Teilbereich 22 des Übergangsstückes 17, wobei in der Bohrung 18 vollständig oder über einen Teilbereich ein Innengewinde 23 angeordnet ist, in die eine Kontaktbuchse 24 eingeschraubt werden kann. Die Kontaktbuchse 24 weist dabei wiederum eine Bohrung 25 mit einem an den Außenumfang des Schweißdrahtes 6 angepaßten Durchmesser 26 auf. Eine im Zentrum der Bohrung 25 verlaufende Mittelachse 27 ist fluchtend mit der Längsmittelachse 21 des Schweißbrenners 1 bzw. der Mittelachse 20 des Übergangsstückes 17 ausgerichtet.

Die Kontaktbuchse 24 hat die Aufgabe, dem Strom, der vom Versorgungsstück 2 über das Versorgungsrohr 10 zum Übergangsstück 17 geführt wird und von diesen an die Kontaktbuchse 24 übergeben wird, an den Schweißdraht 6, der schematisch dargestellt ist, weiterzuleiten, sodaß der Stromübergang auf den Schweißdraht 6 möglichst nahe an der Schweißstelle erfolgt. Weiters weist das Übergangsstück 17, insbesondere im Bereich der Bohrung 18, einzelne um dem Umfang verlaufende ins Zentrum ausgerichtete Bohrungen 28 auf. Selbstverständlich ist es möglich, daß das Übergangsstück 17 aus mehreren Einzelteilen gebildet wird, die anschließend zu einem einzigen Stück verbunden werden können.

Im Schweißbrenner 1 ist weiters eine Zufuhrvorrichtung 29 angeordnet, die beispielsweise aus einem Kupferrohr 30 gebildet wird. Das Kupferrohr 30 wird dabei so angeordnet, daß eine im Zentrum des Kupferrohrs 30 verlaufende Symmetrieachse 31 parallel zur Längsmittelachse 21 des Schweißbrenners 1 angeordnet ist, d.h. daß das Kupferrohr 30 aus der Mitte des Schweißbrenners 1 versetzt ist, sodaß sich beispielsweise eine Oberfläche 32 des Kupferrohres 30 mit einer Innenfläche 33 des Versorgungsrohres 10 berührt und somit eine Kontaktfläche 34 gebildet wird. Desweiteren ragt die Zufuhrvorrichtung 29 in die Bohrung 19 des Übergangsstückes 17 hinein.

Das Kupferrohr 30 der Zufuhrvorrichtung 29 wird im Endbereich 5, also in jenem Bereich, in dem das Kupferrohr 30 in das Übergangsstück 17 einmündet, um einen Winkel 35 in Richtung der Längsmittelachse 21 abgewinkelt, sodaß beim Einführen des Schweißdrahtes 6 in die Zufuhrvorrichtung 29 dieser so abgelenkt wird, daß der Schweißdraht 6 in die Bohrung 25 der Kontaktbuchse 24 abgelenkt wird.

Dabei ist es möglich, daß für die Führung des Schweißdrahtes 6 eine Führungsvorrichtung 36, die beispielsweise durch eine Spiralfeder gebildet sein kann, zum Führen des Schweißdrahtes 6 in die Zufuhrvorrichtung 29 eingeschoben wird. Dies hat den Vorteil, daß der Schweißdraht 6 in der Zufuhrvorrichtung 29 exakter geführt wird, da eine Außenumhüllung 37 des Schweißdrahtes 6 einen wesentlich geringeren Durchmesser als ein Innendurchmesser 38 der Zufuhrvorrichtung 29 aufweist. Die Führungsvorrichtung 36 weist dabei einen gleichen oder größeren Innendurchmesser als die Außenumhüllung 37 des Schweißdrahtes 6 auf, wobei ein Außendurchmesser der Führungsvorrichtung 36 gleich oder kleiner dem Innendurchmesser 38 der Zufuhrvorrichtung 29 ist. Damit ist gewährleistet, daß durch einfaches Austauschen der Führungsvorrichtung 36 der Schweißbrenner 1 für verschiedene Schweißdrähte 6 mit unterschiedlichen Außenumhüllungen 37 des Schweißdrahtes 6 eingesetzt werden kann. Dazu muß jedoch die Kontaktbuchse 24 an den entsprechenden Drahtdurchmesser bzw. an die Außenumhüllung 37 des Schweißdrahtes 6 angepaßt werden, d.h. daß bei Verwendung eines dickeren Schweißdrahtes 6 die Kontaktbuchse 24 verwendet wird, bei der der Durchmesser 26 der Bohrung 25 der Außenumhüllung 37 des Schweißdrahtes 6 entspricht bzw. größer ist.

Weiters können im Inneren des Versorgungsrohres 10 ein oder mehrere weitere Zusatzrohre 39, 40 angeordnet sein, wobei diese an der Oberfläche 32 der Zufuhrvorrichtung 29 und an der Innenfläche 33 des Versorgungsrohres 10 anliegen können. Dazu kann beispielsweise das Zusatzrohr 39 für einen Wasservorlauf und das Zusatzrohr 40 zum Befördern von Preßluft verwendet werden. Dabei ist es beispielsweise möglich, daß das Zusatzrohr 39 über einen Teilbereich des Schweißbrenners 1 geführt ist, wobei bei Verwendung des Zusatzrohrs 39 als Wasservorlauf dieses beispielsweise mit dem Kühlungsrohr 13 endet, sodaß über eine Bohrung zwischen dem Zusatzrohr 39 und der umlaufenden Nut 14 ein Verbindungsrohr 41 - wie strichliert dargestellt - angeordnet werden kann. Durch die Anordnung des Verbindungsrohrs 41 ist es möglich, daß für die Kühlung des Schweißbrenners 1 das Wasser im Inneren, also innerhalb des Versorgungsrohres 10, zugeführt wird und über das Verbindungsrohr 41 das Wasser vom Zusatzrohr 39 zu der umlaufenden Nut 14 des Kühlungsrohrs 13 befördert wird, sodaß in den einzelnen Nuten 12 des Kühlungsrohrs 13 ein Wasserrücklauf erzeugt wird.

Weiters ist es möglich, daß mit dem Zusatzrohr 39 ein eigener Kühlkreis im Inneren des Versorgungsrohres 10 gebildet wird, wobei dazu das Zusatzrohr 39 im Bereich des Übergangsstückes 17 endet. Das Zusatzrohr 39 muß anschließend gegenüber dem weiteren Zusatzrohr 40 isoliert werden, d.h. das eine Trennwand um das weitere Zusatzrohr 40 gebildet wird, sodaß beim Austritt der Kühlflüssigkeit aus dem Zusatzrohr 39 diese Kühlflüssigkeit nicht in das weitere Zusatzrohr 40 und in die Zufuhrvorrichtung 29 eindringen kann. Die Kühlflüssigkeit fließt anschließend außerhalb des Zusatzrohres 39 also im Versorgungsrohr 10 an das Ende des Schweißbrenners 1 zurück.

Bei dem weiteren angeordneten Zusatzrohr 40 kann es sich um eine Zufuhrvorrichtung für eine automatische Säuberung der Gasdüse 16 handeln, d.h. daß die beim Schweißbad entstehenden Schmutzartikel, die sich in der Gasdüse 16 sammeln, durch einfache Preßluft wieder ausgeblasen werden. Dabei endet das Zusatzrohr 40 im Bereich des Übergangsstückes 17, wodurch beim Einblasen von Preßluft in das Zusatzrohr 40 die Preßluft in die Bohrung 19 des Übergangsstückes 17 gelangt. Am Umfang des Übergangsstückes 17 sind im Bereich der Bohrung 19 Ausgangsöffnungen 42 vorgesehen, sodaß die Preßluft von der Bohrung 19 über die Ausgangsöffnungen 42 nach außen gelangen und somit an die Gasdüse 16 strömen und von dort die Schmutzartikel in Richtung der Kontaktbuchse 24 ausgeblasen werden.

Soll nunmehr eine Schweißung mit dem Schweißbrenner 1 durchgeführt werden, so wird automatisch vom Schweißgerät in die Führungsvorrichtung 36 ein Schweißdraht 6 eingeführt, d.h. daß der Schweißdraht 6 von einem Vorratsbehälter über eine Zubringleitung in den Schweißbrenner 1 eingeführt wird, sodaß der Schweißdraht 6 entlang der Zufuhrvorrichtung 29 zur Kontaktbuchse 24 befördert wird. Aufgrund der Anordnung der Zufuhrvorrichtung 29 außerhalb der Längsmittelachse 21 des Schweißbrenners 1, muß im Endbereich 5 die Zufuhrvorrichtung 29 um den Winkel 35 abgewinkelt werden, sodaß der Schweißdraht 6 im Endbereich 5 so umgelenkt wird, daß ein einwandfreier Eintritt des Schweißdrahtes 6 in die Bohrung 25 der Kontaktbuchse 24 bzw. in die Bohrung 18 des Übergangsstückes 17 erfolgen kann.

Durch die winkelige Zufuhr des Schweißdrahtes 6 zu der Bohrung 25 der Kontaktbuchse 24 wird erreicht, daß innerhalb der Kontaktbuchse 24 zumindest eine dauerhafte definierte Kontaktfläche 43 geschaffen wird, da der Schweißdraht 6 an der Oberfläche der Bohrung 25 der Kontaktbuchse 24 immer in Richtung der Mittelachse 27 der Bohrung 25 abgelenkt wird. Dabei ist es jedoch möglich, daß im Bereich des Einganges in die Bohrung 25 eine weitere Kontaktfläche 44 aufgrund eines den Schweißdraht 6 verursachten Knickes 45 erzeugt wird. Verbindet man nunmehr die beiden Kontaktflächen 43, 44, so erhält man eine Gerade 46, die mit punktzweistrichlierter Linie dargestellt ist. Die aus den beiden Kontaktfläche 43, 44 ergebende Gerade 46 weist einen Winkel 47 zur Längsmittelachse 21 und somit zur Mittelachse 27 der Bohrung 25 auf. Durch diese winkelige Anordnung des Schweißdrahtes 6 bzw. die damit hervorgerufenen Biegung des Schweißdrahtes 6 im Endbereich 5 der Zufuhrvorrichtung 29 wird eine Zwangskontaktierung des Schweißdrahtes 6 mit der Kontaktbuchse 24 erreicht.

Dies hat den Vorteil, daß durch die dauerhafte Verbindung des Schweißdrahtes 6 mit der Kontaktbuchse 24, also der Zwangskontaktierung, ein einwandfreier Stromübergang zwischen der Kontaktbuchse 24 und dem Schweißdraht 6 sichergestellt ist, auch dann, wenn ein Schweißdraht 6 mit geringer Dressur bzw. einer geringen Federkonstanten verwendet wird, da durch die schräge bzw. winkelige Zufuhr zu der Kontaktbuchse 24 zumindest immer eine definierte Kontaktfläche 43 in der Kontaktbuchse 24 erzeugt wird.

Ein weiterer Vorteil der winkeligen Zufuhr des Schweißdrahtes 6 zur Kontaktbuchse 24 liegt darin, daß durch die Schaffung der definierten Kontaktfläche 43 im Bereich der Schweißstelle bzw. in der Kontaktbuchse 24 der Drahtwiderstand des Schweißdrahtes 6 konstant bleibt und die Schweißprozeßregelung verbessert wird.

Bei einem Schweißvorgang mit dem erfindungsgemäßen Schweißbrenner 1, insbesondere für einen MIG/MAG-Schweißprozeß, muß um den Schweißdraht 6 eine Schutzgashülle 48 aufgebaut werden, damit der Zutritt von Sauerstoff verhindert wird, sodaß durch einen Lichtbogen 49, wie schematisch durch einen Pfeil dargestellt, ein ordnungsgemäßer Schweißprozeß durchgeführt werden kann. Dazu wird ein Gas 50, insbesondere ein Schutzgas, wie schematisch durch Pfeile dargestellt, durch die Zufuhrvorrichtung 29 an das Übergangsstück 17 zugeführt, d.h. daß das Gas 50 gleichzeitig mit dem Schweißdraht 6 durch die Zufuhrvorrichtung 29 an die Kontaktbuchse 24 gelangt. Im Übergangsstück 17 kann das Gas 50 durch die Bohrungen 28 in einen Innenraum 51 der Gasdüse 16 austreten, sodaß um den Schweißdraht 6 im Bereich des Lichtbogens 49 die Schutzgashülle 48 gebildet werden kann.

Vorteilhaft ist bei dieser Zuführung des Gases 50, daß gleichzeitig in die Bohrung 25 der Kontaktbuchse 24 ebenfalls ein Gas 50 einströmt und somit eine luftdichte Atmosphäre für den Schweißdraht 6 bildet, sodaß eine Korrosion in der Bohrung 25 vermieden wird und damit immer ein sehr guter Stromübergang von der Kontaktbuchse 24 an den Schweißdraht 6 erreicht wird.

In Fig. 4 ist ein anderer Schweißbrenne 1 zum Zuführen des Schweißdrahtes 6 an die Kontaktbuchse 24 gezeigt, wobei für dieselben Teile dieselben Bezugszeichen verwendet werden. Bei den dargestellten Ausführungsbeispielen des Schweißbrenners 1 ist der Endbereich 5 im vergrößerten Maßstab dargestellt.

Dabei wird der Schweißbrenner 1 wiederum durch das Versorgungsrohr 10 mit den außen umliegenden Schichten, wie dies in den Figuren 1 bis 3 beschrieben ist, gebildet. Die Zufuhrvorrichtung 29 wird dabei nunmehr nicht bis zur Bohrung 18 des Übergangsstückes 17 geführt, sondern endet an der Bohrung 19 des Übergangsstückes 17. Dazu kann beispielsweise an der Bohrung 19 eine Verschlußplatte 52 angeordnet sein. Die Verschlußplatte 52 weist dabei für die einzelnen im Versorgungsrohr 10 angeordneten Rohre, insbesondere der Zufuhrvorrichtung 29 und der Zusatzrohre 39, 40, wie diese in Fig. 1 beschrieben sind, Bohrungen 53 auf, um die entsprechenden Medien, wie beispielsweise das Gas 50, an das Übergangsstück 17 zu führen.

Durch die Anordnung der Verschlußplatte 52 wird weiters erreicht, daß die Führungsvorrichtung 36 ebenfalls bei der Verschlußplatte 52 endet, sodaß der Schweißdraht 6 von der Verschlußplatte 52 bis zu einer Eintrittsöffnung 54 der Bohrung 18 des Übergangsstückes 17 frei liegt bzw. nicht geführt ist, wobei die Zufuhrvorrichtung 29 wiederum, wie in Fig. 1 beschrieben, mit Ihrer Symmetrieachse 31 parallel zur Längsmittelachse 21 des Schweißbrenners 1 angeordnet ist. Durch das Enden der Zufuhrvorrichtung 29 im Anfangsbereich des Übergangsstückes 17 ist ein automatisches Einführen des Schweißdrahtes 6 in die Bohrung 25 der Kontaktbuchse 24 nicht mehr möglich, sodaß bei der Inbetriebnahme des Schweißbrenners 1 der Schweißdraht 6 händisch in die Bohrung 25 der Kontaktbuchse 24 eingesetzt werden muß.

Dazu wird die Kontaktbuchse 24 von dem Übergangsstück 17 geschraubt, sodaß bei einer automatischen Schweißdrahtzuführung der Schweißdraht 6 so lange zugeführt wird, bis das Ende des Schweißdrahtes 6 außerhalb des Übergangsstückes 17 bzw. außerhalb der Gasdüse 16 angelangt ist, worauf anschließend der Benutzer durch Aufstecken der Kontaktbuchse 24 auf den Schweißdraht 6 die Kontaktbuchse 24 an das Übergangsstück 17 anschrauben kann. Durch das Aufschrauben der Kontaktbuchse 24 auf das Übergangsstück 17 wird der Schweißdraht 6 derart verformt, sodaß eine Zwangskontaktierung des Schweißdrahtes 6 an der Oberfläche der Bohrung 25 erreicht wird. Diese Verformung des Schweißdrahtes 6 bewirkt wiederum, daß dadurch die definierten Kontaktflächen 43, 44 in der Kontaktbuchse 24 erzeugt werden. Verbindet man nunmehr die beiden Kontaktflächen 43, 44 wieder, so erhält man die Gerade 46, die durch eine punktzweistrichlierte Linie dargestellt ist, wobei diese wiederum den Winkel 47 zu der im Mittel des Schweißbrenner 1 verlaufenden Längsmittelachse 21 bzw. zu der Mittelachse 27 der Bohrung 25 ausbildet. Dazu sei erwähnt, daß die Kontaktbuchse 24 mit ihrer Mittelachse 27 wiederum fluchtend zur Längsmittelachse 21 des Schweißbrenners 1 angeordnet ist.

Durch diese Umlenkung des Schweißdrahtes 6 wird erreicht, daß ein ständiger definierter Kontakt des Schweißdrahtes 6 mit der Kontaktbuchse 24, also eine Zwangskontaktierung des Schweißdrahtes 6, hergestellt wird. Dies ist von Vorteil, da für den Schweißstrom, der über das Versorgungsrohr 10 zur Kontaktbuchse 24 gelangt, ein einwandfreier Stromübergang an den Schweißdraht 6 geschaffen wird. Ein weiterer Vorteil liegt darin, daß durch die Bildung der definierten bzw. vorgegebenen Kontaktfläche 43 bzw. 44 die Schweißprozeßregelung deutlich verbessert wird.

Bei dieser Ausführungsvariante ist der Schweißbrenner 1 nunmehr so ausgeführt, daß das Gas 50 beispielsweise nicht mehr über die Zufuhrvorrichtung 29 an das Übergangsstück 17 zugeführt wird, sondern daß das Gas 50 über die Zusatzrohre 39, 40 an das Übergangsstück 17 zugeführt werden. Das Gas 50 tritt dabei wiederum aus der Verschlußplatte 52 über die Bohrungen 53 aus, sodaß in der Bohrung 19 des Übergangsstückes 17 das Gas 50 einen Schutzschild um den Schweißdraht 6 bildet und über die Bohrungen 28 bzw. die Ausgangsöffnungen 42 der Bohrung 19 in den Innenraum 51 der Gasdüse 16 gelangen kann und somit die Schutzgashülle 48 um den Schweißdraht 6 bildet. Selbstverständlich ist es möglich, daß beispielsweise nach Beendigung des Schweißprozesses die Zusatzrohre 39, 40 mit Preßluft beaufschlagt werden, sodaß eine Säuberung der Gasdüse 16 bzw. der Bohrung 19 ebenfalls möglich ist.

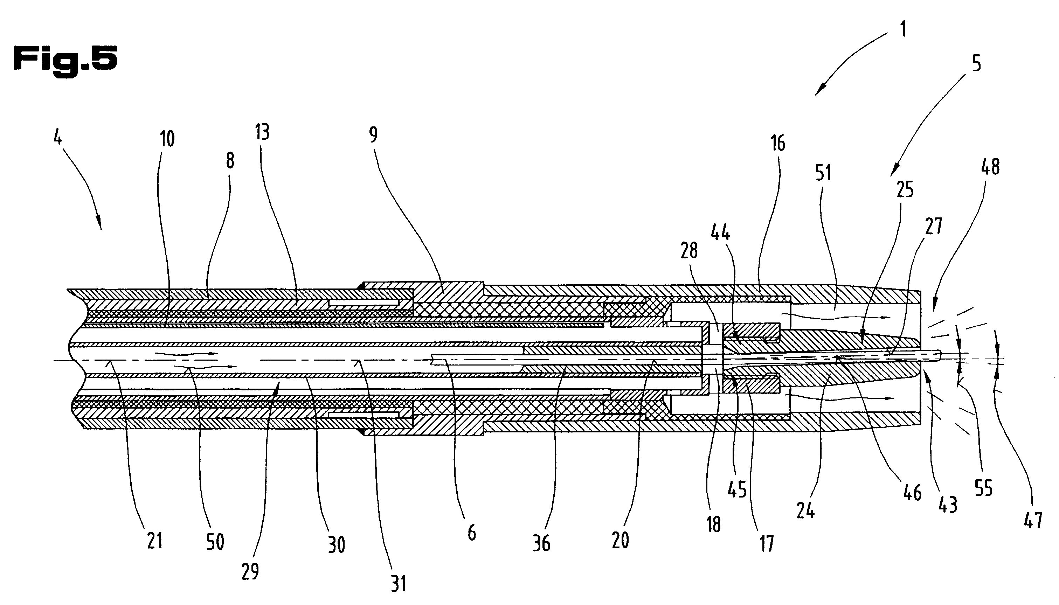

In Fig. 5 ist ein anderer Schweißbrenner 1 gezeigt, wobei wiederum nur der Endbereich 5 des Schweißbrenners 1 dargestellt ist und für dieselben Teile der zuvor beschriebenen Figuren dieselben Bezugszeichen verwendet werden.

Bei dem dargestellten Schweißbrenner 1 wird nunmehr die Zufuhrvorrichtung 29, insbesondere das Kupferrohr 30, im Mittel des Schweißbrenners 1 angeordnet. Dabei ist die Symmetrieachse 31 der Zufuhrvorrichtung 29 fluchtend mit der Längsmittelachse 21 des Schweißbrenners 1 angeordnet. Die Zufuhrvorrichtung 29 erstreckt sich wiederum bis zur Bohrung 18 des Übergangsstückes 17, sodaß der in der Zufuhrvorrichtung 29 angeordnete Schweißdraht 6 direkt von der Zufuhrvorrichtung 29 in die Bohrung 18 des Übergangsstückes 17 einmünden kann. Selbstverständlich ist es möglich, daß die Zufuhrvorrichtung 29 am Übergangsstück 17 endet.

Die Mittelachse 20 der Bohrung 18 des Übergangsstückes 17 ist fluchtend mit der Längsmittelachse 21 bzw. der Symmetrieachse 31 der Zufuhrvorrichtung 29 angeordnet. Schraubt man nunmehr die Kontaktbuchse 24 in das Übergangsstück 17, so ist die Kontaktbuchse 24 im Mittel des Schweißbrenners 21 angeordnet.

Die Bohrung 25 in der Kontaktbuchse 24 wird nunmehr winkelig ausgeführt, sodaß die Mittelachse 27 der Bohrung 25 einen Winkel 55 zur Mittelachse 20 der Bohrung 18 bzw. zur Längsmittelachse 21 des Schweißbrenners 1 aufweist.

Durch diese winkelige Ausbildung der Bohrung 25 wird wiederum erreicht, daß durch den Schweißdraht 6 die definierten Kontaktflächen 43, 44 in der Bohrung 25 ausgebildet werden. Verbindet man nunmehr die beiden definierten Kontaktflächen 43, 44 über die mit einer punktzweistrichlierten Linie dargestellten Gerade 46, so weist die Gerade 46 den Winkel 47 zu der Mittelachse 20 der Bohrung 18 bzw. zur Längsmittelachse 21 des Schweißbrenners 1 auf.

Durch diese winkelige Ausbildung wird erreicht, daß dadurch eine ständig fixierte Reibfläche, die den definierten Kontaktflächen 43, 44 entspricht, an der Kontaktbuchse 24 festgelegt sind und somit der Stromübergang von der Kontaktbuchse 24 an den Schweißdraht 6 ständig gewährleistet ist.

Selbstverständlich ist es möglich, daß beispielsweise die Bohrung 25 in der Kontaktbuchse 24 nicht winkelig angeordnet ist, sondern daß die Bohrung 25 außerhalb der Mitte der Kontaktbuchse 24 angeordnet wird, sodaß der Schweißdraht 6 wiederum in die Bohrung 25 eingefädelt wird und somit der Schweißdraht 6 nach Austritt aus der Führungsvorrichtung 36 so abgelenkt wird, daß die Kontaktflächen 43, 44 in der Kontaktbuchse 24 ausgebildet wird.

Weiters ist es möglich, daß die Kontaktbuchse 24 aus der Mitte des Schweißbrenners 1 also parallel zur Längsmittelachse 21 angeordnet wird, sodaß dadurch der Schweißdraht 6 beim Eintritt in die Bohrung 25 der Kontaktbuchse 24 umgelenkt wird, wodurch wiederum in der Kontaktbuchse 24 zumindest eine bzw. zwei oder mehrere definierte Kontaktflächen 43, 44 geschaffen werden. Selbstverständlich ist es auch möglich, daß die Zufuhrvorrichtung 29 und die Kontaktbuchse 24 winkelig zueinander angeordnet werden, wodurch wiederum durch den Schweißdraht 6 die definierten Kontaktflächen 43, 44 geschaffen werden.

Bei einem Schweißprozeß wird das Gas 50, wie in den Figuren 1 bis 3 beschrieben, wiederum über die Zufuhrvorrichtung 29 zugeführt, sodaß das Gas 50 über die Bohrungen 28 in den Innenraum 51 der Gasdüse 16 austreten kann, sodaß um den Schweißdraht 6 die Schutzgashülle 48 erzeugt werden kann.

Selbstverständlich ist es möglich, daß bei dieser Ausführungsform wiederum zusätzliche Zusatzrohre 39, 40 im Inneren des Versorgungsrohres 10 angeordnet sein können, sodaß diese wiederum zur Säuberung der Gasdüse 16 bzw. für einen Kühlkreislauf verwendet werden können.

Weiters ist es möglich, um eine exakte Position der definierten Kontaktfläche 43, 44 in der Kontaktbuchse 24 zu erhalten, daß die Kontaktbuchse 24 mit einem Schnappverschluß ausgebildet ist, sodaß eine exakte Position des Schweißdrahtes 6 definiert wird.

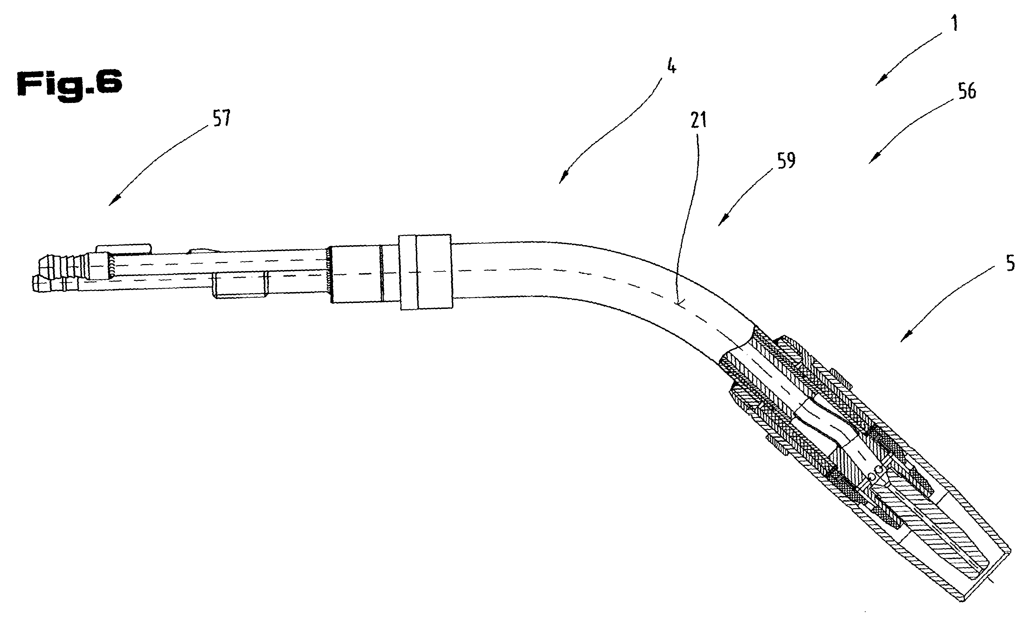

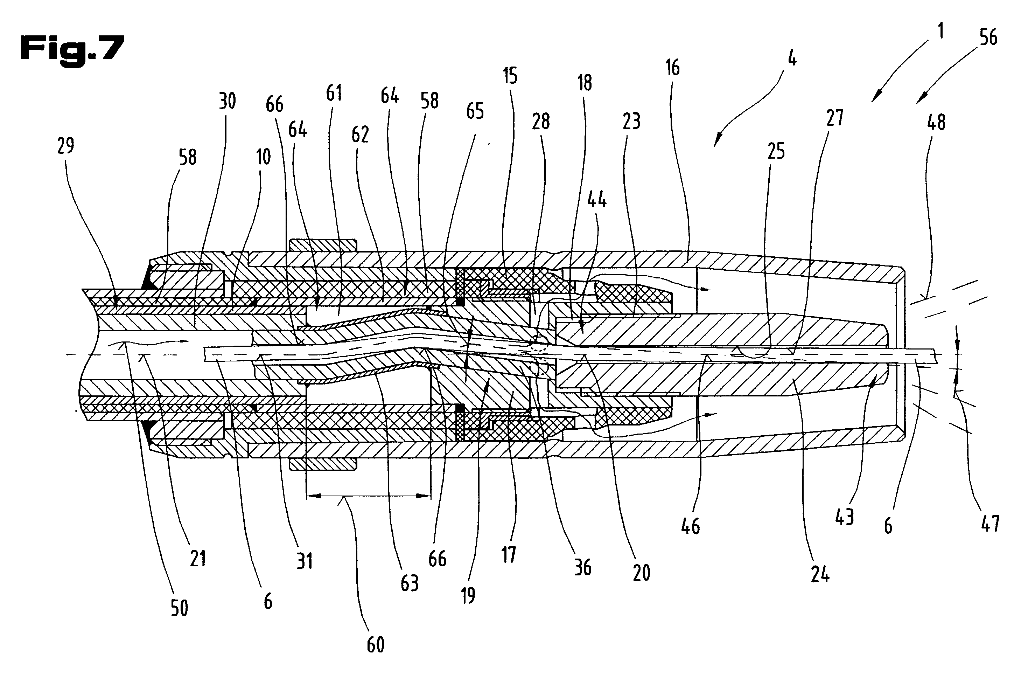

In den Figuren 6 und 7 ist ein anderer Schweißbrenner 1, insbesondere ein Handschweißbrenner 56, für ein Schweißgerät gezeigt, wobei für dieselben Teile der zuvor beschriebenen Figuren dieselben Bezugszeichen verwendet werden.

Der Handschweißbrenner 56 weist eine Verbindungsvorrichtung 57 zum Verbinden des Handschweißbrenners 56 mit den Leitungen des Schweißgerätes auf. Über die Verbindungsvorrichtung 57 wird der Handschweißbrenner 56 mit Strom und Spannung-sowie mit dem Schweißdraht 6 und dem Gas 50 - versorgt, wobei der Handschweißbrenner 56 gegenüber der Außenummantelung 4 durch Isolierschichten 58 isoliert ist, sodaß ohne Gefahr der Handschweißbrenner 56 von einem Benutzer verwendet werden kann.

Bei dem dargestellten Ausführungsbeispiel ist ersichtlich, daß der Handschweißbrenner 56 im Endbereich 5 eine Krümmung 59 aufweist, wodurch ein besseres Handling des Handschweißbrenners 56 für eine Handschweißung erreicht wird.

Das Versorgungsrohr 10 wird bei der dargestellten Ausführungsform im Mittel angeordnet, sodaß wiederum die Symmetrieachse 31 des Versorgungsrohres 10 fluchtend mit der Längsmittelachse 21 des Schweißbrenners 1, insbesondere des Handschweißbrenners 56, verläuft. Das Versorgungsrohr 10 endet in einem Abstand 60 vor dem Übergangsstück 17, sodaß zwischen dem Ende des Versorgungsrohres 10 und dem Übergangsstück 17 ein Hohlraum 61 geschaffen wird. Damit nunmehr der Strom vom Versorgungsrohr 10 zum Übergangsstück 17 gelangt, wird an der Außenfläche des Versorgungsrohres 10 sowie an der Außenfläche des Übergangsstückes 17 ein Verbindungsrohr 62 übergestülpt, sodaß ein einwandfreier Kontakt zwischen dem Versorgungsrohr 10 und dem Übergangsstück 17 geschaffen wird. Das Verbindungsrohr 62 kann dabei mit den Versorgungsrohr 10 sowie mit dem Übergangsstück 17 verschweißt bzw. verlötet werden.

Im Versorgungsrohr 10 ist wiederum die Zufuhrvorrichtung 29, das durch das Kupferrohr 30 gebildet wird, angeordnet, wobei bei diesem Ausführungsbeispiel keine weiteren zusätzlichen Zusatzrohre 39, 40 im Inneren des Versorgungsrohres 10 angeordnet sind. Die Zufuhrvorrichtung 29, insbesondere das Kupferrohr 30, endet dabei wiederum mit dem Ende des Versorgungsrohrs 10, wobei das Kupferrohr 30 beispielsweise mit dem Versorgungsrohr 10 verschweißt werden kann, um eine Verschiebung des Kupferrohres 30 zu verhindern.

Um nunmehr einen einwandfreien Übergang vom Kupferrohr 30 zum Übergangsstück 17 zu gewährleisten, wird in den Hohlraum 61 ein Zwischenstück 63 angeordnet. Das Zwischenstück 63 kann dabei wiederum mit dem Kupferrohr 30 der Zufuhrvorrichtung 29 und dem Übergangsstück 17, insbesondere der Bohrung 19 des Übergangsstück 17, verschweißt werden.

Um wiederum einen einwandfreien Kontakt des Schweißdrahtes 6 in der an das Übergangsstück 17 anschließenden Kontaktbuchse 24 zu erreichen, weist das Zwischenstück 63 eine Biegung 64 auf, sodaß der über die Zufuhrvorrichtung 29 zugeführte Schweißdraht 6 aus dem Mittel des Handschweißbrenners 56 abgelenkt wird. Im Bereich des Übergangsstückes 17 wird das Zwischenstück 63 wiederum in Richtung zur Längsmittelachse 21 durch eine weitere Biegung 64 abgewinkelt.

Durch diese Abwinkelung wird eine nahtlose Einmündung in die Bohrung 19 des Übergangsstückes 17 erreicht, wobei die Bohrung 19 des Übergangsstückes 17 in einem Winkel 65 zur Mittelachse 20 der Bohrung 18 angeordnet ist, sodaß ein nahtloser Übergang zwischen dem Zwischenstück 63 und der Bohrung 19 erreicht wird. Die Bohrung 18 des Übergangsstückes 17 ist dabei wiederum fluchtend mit der Längsmittelachse 21 des Handschweißbrenners 56 angeordnet, wobei in der Bohrung 18 wiederum ein Innengewinde 23 angeordnet sein kann, sodaß die Kontaktbuchse 24 in die Bohrung 18 eingeschraubt werden kann.

Die Kontaktbuchse 24 weist die Bohrung 25 auf, wobei diese fluchtend zur Längsmittelachse 21 des Handschweißbrenners 56 ausgerichtet ist und somit fluchtend zur Mittelachse 20 der Bohrung 18 verläuft.

Bei dem dargestellten Handschweißbrenner 56 ist es möglich, die Führungsvorrichtung 36 in der Zufuhrvorrichtung 29 anzuordnen, wobei die Führungsvorrichtung 36 wiederum bis zur Bohrung 18 des Übergangsstückes 17 geschoben werden kann, wie das wiederum schematisch dargestellt ist.

Wird nunmehr der Schweißdraht 6 in die Führungsvorrichtung 36 eingeführt, so verläuft der Schweißdraht 6 entlang der Längsmittelachse 21 bis zum Ende des Versorgungsrohres 10. Beim Übergang in das Zwischenstück 63 wird der Schweißdraht 6 von der Längsmittelachse 21 wegbewegt und verläuft anschließend in Richtung der Außenummantelung 4, wodurch im Bereich des Endes des Versorgungsrohres 10 bzw. des Endes der Zufuhrvorrichtung 29 mehrere Kontaktflächen 66 geschaffen werden. Anschließend wird der Schweißdraht 6 im Übergangsbereich zwischen dem Zwischenstück 63 und der Bohrung 19 in Richtung zur Längsmittelachse 21 abgelenkt, sodaß im Bereich des Überganges zwischen dem Zwischenstück 63 und der Bohrung 19 des Übergangsstückes 17 wiederum eine Kontaktfläche 66 geschaffen wird. Anschließend mündet der Schweißdraht 6 in die Bohrung 25 der Kontaktbuchse 24 ein, sodaß der Schweißdraht 6 an der Oberfläche der Bohrung 25 abgelenkt wird und somit die definierten Kontaktflächen 43, 44 in der Kontaktbuchse 24 ausgebildet werden. Durch diese Ablenkung des Schweißdrahtes 6 wird eine Zwangskontaktierung erreicht, wodurch ein einwandfreier Stromübergang von der Kontaktbuchse 24 an den Schweißdraht 6 geschaffen wird. Verbindet man die beiden Kontaktflächen 43, 44 über die Gerade 46, die mit einer punktzweistrichlierten Linie dargestellt ist, so weist die Gerade 46 den Winkel 47 zur Mittelachse 20 der Bohrung 18 auf.

Der Vorteil dieser Ablenkung des Schweißdrahtes 6 liegt darin, daß bei Verwendung eines Schweißdrahtes 6 zumindest eine ständige Kontaktfläche 43 oder 44 in der Kontaktbuchse 24 geschaffen wird und somit ein ständiger Stromübergang an den Schweißdraht 6 gewährleistet ist.

Um einen Schweißprozeß mit dem Handschweißbrenner 56 durchführen zu können, wird das Gas 50, das wiederum mit einem Pfeil schematisch dargestellt ist, über die Zufuhrvorrichtung 29 zum Übergangsstück 17 geführt. Das Gas 50 kann anschließend über die Bohrung 28 in den Innenraum 51 der Gasdüse 16 strömen, sodaß am Ende der Gasdüse 16 die Schutzgashülle 48 für den Schweißdraht 6 erzeugt werden kann.

Weiters ist es möglich, daß der Hohlraum 61 für einen Kühlkreislauf verwendet wird, wobei beispielsweise dazu das Kupferrohr 30 der Zufuhrvorrichtung 29 Rippen aufweisen kann, sodaß ein Zulauf und Ablauf für das Kühlmedium geschaffen wird.

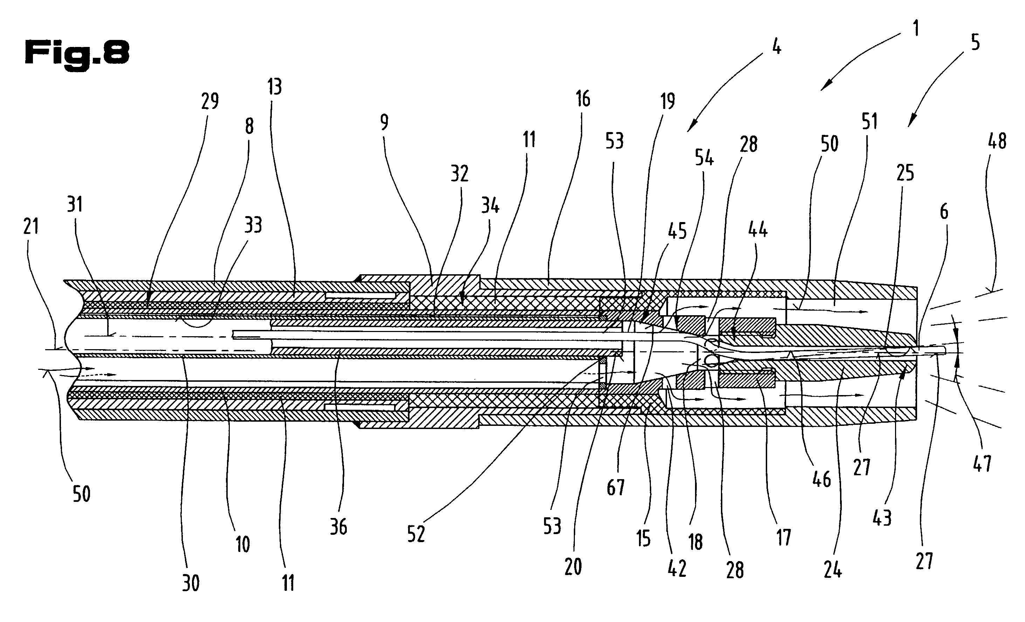

In Fig. 8 ist nunmehr ein anderer Schweißbrenner 1 zum Zuführen des Schweißdrahtes 6 an die im Mittel der Längsmittelachse 21 verlaufenden Kontaktbuchse 24 gezeigt, wobei für die selben Teile die selben Bezugszeichen verwendet werden. Bei den dargestellten Ausführungsbeispielen des Schweißbrenners 1 ist der Endbereich 5 im vergrößerten Maßstab dargestellt.

Dabei wird der Schweißbrenner 1 wiederum durch das Versorgungsrohr 10 mit den außen umliegenden Schichten, wie dies in den Fig. 1 bis 7 beschrieben ist, gebildet. Im Schweißbrenner 1 wird die Zufuhrvorrichtung 29 wiederum so angeordnet, daß die im Zentrum der Zufuhrvorrichtung 29 verlaufende Symmetrieachse 31 parallel zur Längsmittelachse 21 des Schweißbrenners 1 angeordnet ist, d.h. daß die Zufuhrvorrichtung 29 aus der Mitte des Schweißbrenners 1 versetzt ist, sodaß sich beispielsweise die Oberfläche 32 des Kupferrohres 30 mit der Innenfläche 33 des Versorgungsrohres 10 berührt und somit eine Kontaktfläche 34 gebildet wird.

Im Übergangsbereich zwischen der Bohrung 18 und der Bohrung 19 wird nunmehr eine zur Längsmittelachse 21 winkelig verlaufende Fläche 67 angeordnet, wobei diese von der Bohrung 19 zur Bohrung 18, also in Richtung zur Kontaktbuchse 24, verjüngend verlauft. Selbstverständlich ist es möglich, daß bei einem derartigen Ausführungsbeispiel das Übergangsstück 17 nur mehr aus der Bohrung 18 und der winkelig verlaufenden Fläche 67 gebildet wird, sodaß die Bohrung 19 im Übergangsstück 17 entfallen kann und somit das Übergangsstück 17 mit der Fläche 67 endet. Weiters ist es möglich, daß das Übergangsstück 17 nur aus der Bohrung 18 gebildet wird, wobei dabei vor der Bohrung 18 ein weiterer Bauteil mit der winkelig verlaufenden Fläche 67 angeordnet wird.

Die Zufuhrvorrichtung 29 erstreckt sich nunmehr nicht bis zur Bohrung 18 des Übergangsstückes 17, sondern endet vor oder direkt an der Fläche 67, d.h. daß bei einer Anordnung der Fläche 67 zwischen den Bohrungen 18, 19 des Übergangsstückes 17 die Zufuhrvorrichtung 29 in die Bohrung 19 hineinragen kann.

Dazu kann beispielsweise wiederum an der Bohrung 19 die Verschlußplatte 52 angeordnet sein. Die Verschlußplatte 52 weist dabei für die einzelnen im Versorgungsrohr 10 angeordneten Rohre, insbesondere der Zufuhrvorrichtung 29 und der Zusatzrohre 39, 40, wie diese in Fig. 1 beschrieben sind, Bohrungen 53 auf, um die entsprechenden Medien, wie beispielsweise das Gas 50, an das Übergangsstück 17 zu führen.

Die Bohrung in der Verschlußplatte 52 für die Zufuhrvorrichtung 29 kann dabei so ausgebildet werden, daß die Zufuhrvorrichtung 29 durch diese Bohrung in die Bohrung 19 eingeschoben werden kann. Es ist jedoch auch möglich, daß die Zufuhrvorrichtung 29 bereits an der Verschlußplatte 52 endet, da durch die Anordnung der winkeligen Fläche 67 der Schweißdraht 6 bzw. die Führungsvorrichtung 36 in Richtung der Bohrung 18 abgelenkt wird und somit ein automatisches Einführen des Schweißdrahtes 6 in die Bohrung 25 der Kontaktbuchse 24 erreicht wird.

Soll nunmehr eine Schweißung mit dem Schweißbrenner 1 durchgeführt werden, so wird automatisch vom Schweißgerät in die Führungsvorrichtung 36 ein Schweißdraht 6 eingeführt, d.h. daß der Schweißdraht 6 von einem Vorratsbehälter über eine Zubringleitung in den Schweißbrenner 1 eingeführt wird, sodaß der Schweißdraht 6 entlang der Zufuhrvorrichtung 29 zur Kontaktbuchse 24 befördert wird. Aufgrund der Anordnung der Zufuhrvorrichtung 29 außerhalb der Längsmittelachse 21 des Schweißbrenners 1, muß im Endbereich 5 der Schweißdraht 6 bzw. die Führungsvorrichtung 36 um einen Winkel, der durch die winkelig verlaufende Fläche 67 bestimmt wird, abgewinkelt werden, sodaß der Schweißdraht 6 bzw. die Führungsvorrichtung 36 im Endbereich 5 so umgelenkt wird, daß ein einwandfreier Eintritt des Schweißdrahtes 6 in die Bohrung 25 der Kontaktbuchse 24 bzw. in die Bohrung 18 des Übergangsstückes 17 erfolgen kann.

Durch die winkelige Zufuhr des Schweißdrahtes 6 zu der Bohrung 25 der Kontaktbuchse 24 wird erreicht, daß innerhalb der Kontaktbuchse 24 zumindest eine dauerhafte definierte Kontaktfläche 43 geschaffen wird, da der Schweißdraht 6 an der Oberfläche der Bohrung 25 der Kontaktbuchse 24 immer in Richtung der Mittelachse 27 der Bohrung 25 abgelenkt wird. Dabei ist es jedoch möglich, daß im Bereich des Einganges in die Bohrung 25 eine weitere Kontaktfläche 44 aufgrund eines durch den Schweißdraht 6 verursachten Knickes 45 erzeugt wird. Verbindet man nunmehr die beiden Kontaktflächen 43, 44, so erhält man die Gerade 46, die mit punktzweistrichlierter Linie dargestellt ist. Die sich aus den beiden Kontaktflächen 43, 44 ergebende Gerade 46 weist den Winkel 47 zur Längsmittelachse 21 und somit zur Mittelachse 27 der Bohrung 25 auf. Durch diese winkelige Anordnung des Schweißdrahtes 6 bzw. die damit hervorgerufenen Biegung des Schweißdrahtes 6 im Endbereich 5 der Zufuhrvorrichtung 29 wird eine Zwangskontaktierung des Schweißdrahtes 6 mit der Kontaktbuchse 24 erreicht.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

### Bezugszeichenaufstellung

- 1: Schweißhrenner
- 2: Versorgungsstück
- 3: Isolationsring
- 4: Außenummantelung
- 5: Endbereich

- 6: Schweißdraht
- 7: Einzelteil
- 8: Einzelteil
- 9: Einzelteil
- 10: Versorgungsrohr

- 11: Isolationsschicht
- 12: Nut
- 13: Kühlungsrohr
- 14: Nut
- 15: Isolationsstück

- 16: Gasdüse
- 17: Übergangsstück
- 18: Bohrung
- 19: Bohrung
- 20: Mittelachse

- 21: Längsmittelachse
- 22: Teilbereich
- 23: Innengewinde
- 24: Kontaktbuchse
- 25: Bohrung

- 26: Durchmesser
- 27: Mittelachse
- 28: Bohrung
- 29: Zufuhrvorrichtung
- 30: Kupferrohr

- 31: Svmmetrieachse
- 32: Oberfläche
- 33: Innenfläche
- 34: Kontaktfläche
- 35: Winkel

- 36: Führungsvorrichtung
- 37: Außenumhüllung
- 38: Innendurchmesser
- 39: Zusatzrohr
- 40: Zusatzrohr

- 41: Verbindungsrohr
- 42: Ausgangsöffnung
- 43: Kontaktfläche
- 44: Kontaktfläche
- 45: Knick

- 46: Gerade
- 47: Winkel
- 48: Schutzgashülle
- 49: Lichtbogen
- 50: Gas

- 51: Innenraum
- 52: Verschlußplatte
- 53: Bohrung
- 54: Eintrittsöffnung
- 55: Winkel

- 56: Handschweißbrenner
- 57: Verbindungsvorrichtung
- 58: Isolierschicht
- 59: Krümmung
- 60: Abstand

- 61: Hohlraum
- 62: Verbindungsrohr
- 63: Zwischenstück
- 64: Biegung
- 65: Winkel

- 66: Kontaktfläche
- 67: Fläche

## Patentansprüche

1. Schweißbrenner mit einer Kontaktbuchse und einer Zufuhrvorrichtung für einen Schweißdraht, wobei sich die Zufuhrvorrichtung bis in den Bereich der Kontaktbuchse erstreckt und den Schweißdraht quer zu einer Bohrung der Kontaktbuchse umlenkt, **dadurch gekennzeichnet, daß** eine im Zentrum der Zufuhrvorrichtung (29) bzw. einer in der Zufuhrvorrichtung (29) angeordneten Führungsvorrichtung (36) verlaufenden Symmetrieachse (31) parallel zu einer im Zentrum des Schweißbrenners (1) verlaufenden Längsmittelachse (21) angeordnet ist und zur Einfuhr des Schweißdrahtes (6)in die Kontaktbuchse (24) die Zufuhrvorrichtung (29) bzw. Führungsvorrichtung (36) schräg zur Mittelachse (27) einer Bohrung (25) der Kontaktbuchse (24) in Richtung der Längsmittelachse (21) verformt ist.

2. Schweißbrenner nach Anspruch 1, **dadurch gekennzeichnet, daß** die Kontaktbuchse (24) und die Zufuhrvorrichtung (29) über ein Übergangsstück (17) zueinander gehaltert sind.

3. Schweißbrenner nach Anspruch 2, **dadurch gekennzeichnet, daß** das Übergangsstück (17) zwei Bohrungen (18, 19) aufweist.

4. Schweißbrenner nach einem oder mehreren der Ansprüche 1 bis 3, **dadurch gekennzeichnet, daß** die Kontaktbuchse (24) beispielsweise über ein Innengewinde (23) oder einen Schnappverschluß mit der Bohrung (18) des Übergangsstückes (17) verbunden ist.

5. Schweißbrenner nach einem oder mehreren der Ansprüche 1 bis 4, **dadurch gekennzeichnet, daß** die Zufuhrvorrichtung (29) im Bereich der Bohrung (19) angeordnet ist.

6. Schweißbrenner nach einem oder mehreren der Ansprüche 1 bis 5, **dadurch gekennzeichnet, daß** eine im Mittel der Bohrung (25) der Kontaktbuchse (24) verlaufenden Mittelachse (27) fluchtend mit der Längsmittelachse (21) angeordnet ist.

7. Schweißbrenner nach einem oder mehreren der Ansprüche 1 bis 6, **dadurch gekennzeichnet, daß** in der Zufuhrvorrichtung (29) eine Führungsvorrichtung (36) angeordnet ist.

8. Schweißbrenner nach Anspruch 7, **dadurch gekennzeichnet, daß** die Führungsvorrichtung (36) beispielsweise aus einer Spiralfeder oder einem elastischen Kunststoff bzw. aus einem Material mit elastischen Eigenschaften gebildet ist.

9. Schweißbrenner nach Anspruch 7 oder 8, **dadurch gekennzeichnet, daß** die Führungsvorrichtung (36) einen Außendurchmesser aufweist, der geringer als ein Innendurchmesser (38) der Zufuhrvorrichtung (29) ist.

10. Schweißbrenner nach einem oder mehreren der Ansprüche 7 bis 9, **dadurch gekennzeichnet, daß** die Führungsvorrichtung (36) einen Innendurchmesser aufweist, der zumindest gleich oder größer ist als der Außendurchmesser bzw. die Außenumhüllung (37) des Schweißdrahtes (6).

11. Schweißbrenner nach einem oder mehreren der Ansprüche 1 bis 10, **dadurch gekennzeichnet, daß** die Zufuhrvorrichtung (29) bzw. die Führungsvorrichtung (36) in die Bohrung (19) des Übergangsstückes (17) hineinragt.

12. Schweißbrenner nach einem oder mehreren der Ansprüche 1 bis 11, **dadurch gekennzeichnet, daß** die Zufuhrvorrichtung (29) um einen Winkel (35) in Richtung der Längsmittelachse (21) des Schweißbrenners (1) abgewinkelt ist.

13. Schweißbrenner nach einem oder mehreren der Ansprüche 1 bis 12, **dadurch gekennzeichnet, daß** sich die Zufuhrvorrichtung (29) mit der Bohrung (18) des Übergangsstückes (17) berühren.

14. Schweißbrenner nach einem oder mehreren der Ansprüche 1 bis 13, **dadurch gekennzeichnet, daß** durch die winkelige Anordnung der Zufuhrvorrichtung (29) im Bereich des Übergangsstückes (17) der Schweißdraht (6) so umgelenkt ist, daß durch die Außenumhüllung (37) des Schweißdrahtes (6) in der Bohrung (25) der Kontaktbuchse (24) zumindest eine oder mehrere definierte Kontaktflächen (43, 44) ausgebildet sind, und daß eine die beiden Kontaktflächen (43, 44) verbindende Gerade (46) einen Winkel (47) zu der im Mittel des Schweißbrenners (1) verlaufenden Längsmittelachse (21) aufweist.

15. Schweißbrenner nach einem oder mehreren der Ansprüche 1 bis 10, **dadurch gekennzeichnet, daß** die Zufuhrvorrichtung (29) und oder die Führungsvorrichtung (36) beim Eintritt in die Bohrung (19) des Übergangsstückes (17) endet.

16. Schweißbrenner nach einem oder mehreren der Ansprüche 2, 3, **dadurch gekennzeichnet, daß** die Bohrung (19) des Übergangsstückes (17) durch eine Verschlußplatte (52) verschlossen ist.

17. Schweißbrenner nach Anspruch 16, **dadurch gekennzeichnet, daß** die Verschlußplatte (52) Bohrungen (53) aufweist.

18. Schweißbrenner nach einem oder mehreren der Ansprüche 16 oder 17, **dadurch gekennzeichnet, daß** der Schweißdraht (6) zwischen der Verschlußplatte (52) und der Bohrung (25) der Kontaktbuchse (24) in der Bohrung (19) des Übergangsstückes (17) freiliegt.

19. Schweißbrenner nach einem oder mehreren der Ansprüche 15 bis 18, **dadurch gekennzeichnet, daß** durch das zueinander versetzte Anordnen der Zufuhrvorrichtung (29) bzw. der Führungsvorrichtung (36) und der Bohrung (25) der Kontaktbuchse (24) der Schweißdraht (6) im Bereich der Bohrung (19) des Übergangsstückes (17) winkelig zu der Längsmittelachse (21) des Schweißbrenners (1) verläuft, sodaß sich im Bereich der in der Bohrung (25) der Kontaktbuchse (24) zumindest eine oder mehrere definierten Kontaktflächen (43, 44) ausbilden und daß die daraus verbindende Gerade (46) einen Winkel (47) zur Längsmittelachse (21) aufweist.

20. Schweißbrenner nach Anspruch 1, **dadurch gekennzeichnet, daß** zwischen der Zufuhrvorrichtung (29) bzw. der Führungsvorrichtung (36) und der Bohrung (19) des Übergangsstückes (17) ein Zwischenstück (63) angeordnet ist.

21. Schweißbrenner nach Anspruch 3, **dadurch gekennzeichnet, daß** die Bohrung (19) des Übergangsstückes (17) einen Winkel (65) zu der Bohrung (18) des Übergangsstückes (17) aufweist, und daß die Mittelachse (20) der Bohrung (18) fluchtend mit der Längsmittelachse (21) angeordnet ist.

22. Schweißbrenner nach Anspruch 3, **dadurch gekennzeichnet, daß** das Übergangsstück (17) mit der Bohrung (18) und der zur Bohrung (18) winkelig verlaufenden Fläche (67) ausgebildet ist.

23. Schweißbrenner nach Anspruch 3, **dadurch gekennzeichnet, daß** das Übergangsstück (17) die Bohrung (18) aufweist, und daß vor der Bohrung (18) ein weiterer Teil mit der winkelig verlaufenden Fläche (67) angeordnet ist.

24. Schweißbrenner nach Anspruch 2 oder 3, **dadurch gekennzeichnet, daß** die Bohrung (18) des Übergangsstückes (17) mit ihrer Mittelachse (20) fluchtend mit der Längsmittelachse (21), die im Zentrum des Schweißbrenners (1) verläuft, positioniert ist.

25. Schweißbrenner nach Anspruch 2, 3 oder 24, **dadurch gekennzeichnet, daß** die Bohrung (18) des Übergangsstückes (17) sich über einen Teilbereich (22) des Übergangsstückes (17) erstreckt, wobei in der Bohrung (18) vollständig oder über einen Teilbereich ein Innengewinde (23) angeordnet ist, in die die Kontaktbuchse (24) einschraubbar ist.

## Claims

1. Welding torch with a female contact and a feed device for a welding wire, wherein the feed device extends into the region of the female contact and deflects the welding wire transversely to a bore of the female contact, **characterised in that** an axis of symmetry (31) is disposed so as to extend through the centre of the feed device (29) and a guide mechanism (36) arranged in the feed device (29), parallel with a longitudinal central axis (21) extending through the centre of the welding torch (1) and, in order to introduce the welding wire (6) into the female contact (24), the feed device (29), respectively the guide mechanism (36) is bent relative to the central axis (27) of a bore (25) of the female contact (24) in the direction of the longitudinal central axis (21).

2. Welding torch as claimed in claim 1, **characterised in that** the female contact (24) and the feed device (29) are connected to one another by an adapter (17).

3. Welding torch as claimed in claim 2, **characterised in that** the adapter (17) has two bores (18, 19).

4. Welding torch as claimed in one or more of claims 1 to 3, **characterised in that** the female contact (24) is connected to the bore (18) of the adapter (17) by means of an internal thread (23) or an snap-fit connection, for example.

5. Welding torch as claimed in one or more of claims 1 to 4, **characterised in that** the feed device (29) is disposed in the region of the bore (19).

6. Welding torch as claimed in one or more of claims 1 to 5, **characterised in that** a central axis (27) extending through the centre of the bore (25) of the female contact (24) is aligned with the longitudinal central axis (21).

7. Welding torch as claimed in one or more of claims 1 to 6, **characterised in that** a guide mechanism (36) is provided in the feed device (29).

8. Welding torch as claimed in claim 7, **characterised in that** the guide mechanism (36) is provided in the form of a coil spring or an elastic synthetic material or a material with elastic properties, for example.

9. Welding torch as claimed in claim 7 or 8, **characterised in that** the external diameter of the guide mechanism (36) is smaller than an internal diameter (38) of the feed device (29).

10. Welding torch as claimed in one or more of claims 7 to 9, **characterised in that** the internal diameter of the guide mechanism (36) is at least the same as or larger than the external diameter or external sheath (37) of the welding wire (6).

11. Welding torch as claimed in one or more of claims 1 to 10, **characterised in that** the feed device (29), respectively the guide mechanism (36) projects into the bore (19) of the adapter (17).

12. Welding torch as claimed in one or more of claims 1 to 11, **characterised in that** the feed device (29) is bent in the direction of the longitudinal central axis (21) of the welding torch (1) by an angle (35).

13. Welding torch as claimed in one or more of claims 1 to 12, **characterised in that** the feed device (29) is in contact with the bore (18) of the adapter (17).

14. Welding torch as claimed in one or more of claims 1 to 13, **characterised in that**, as a result of the angled arrangement of the feed device (29) in the region of the adapter (17), the welding wire (6) is bent so that at least one or more defined contact surfaces (43, 44) are formed by the external sheath (37) of the welding wire (6) in the bore (25) of the female contact (24) and a straight line (46) linking the two contact surfaces (43, 44) subtends an angle (47) with the longitudinal central axis (21) extending through the centre of the welding torch (1).

15. Welding torch as claimed in one or more of claims 1 to 10, **characterised in that** the feed device (29) and/or the guide mechanism (36) terminates on entering the bore (19) of the adapter (17).

16. Welding torch as claimed in one or more of claims 2, 3, **characterised in that** the bore (19) of the adapter (17) is closed off by means of a closing plate (52).

17. Welding torch as claimed in claim 16, **characterised in that** the closing plate (52) has bores (53).

18. Welding torch as claimed in one or more of claims 16 or 17, **characterised in that** the welding wire (6) lies free between the closing plate (52) and the bore (25) of the female contact (24) in the bore (19) of the adapter (17).

19. Welding torch as claimed in one or more of claims 15 to 18, **characterised in that**, due to the offset arrangement between the feed device (29) or guide mechanism (36) and the bore (25) of the female contact (24), the welding wire (6) runs at an angle to the longitudinal central axis (21) of the welding torch (1) in the region of the bore (19) of the adapter (17) forming at least one or more contact surfaces (43, 44) in the region of the bore (25) of the female contact (24) and the resultant connecting line (46) subtends an angle (47) with the longitudinal central axis (21).

20. Welding torch as claimed in claim 1, **characterised in that** a connecting piece (63) is disposed between the feed device (29) or guide mechanism (36) and the bore (19) of the adapter (17).

21. Welding torch as claimed in claim 3, **characterised in that** the bore (19) of the adapter (17) subtends an angle (65) with the bore (18) of the adapter (17) and the central axis (20) of the bore (18) is aligned with the longitudinal central axis (21).

22. Welding torch as claimed in claim 3, **characterised in that** the adapter (17) is provided with the bore (18) and a face (67) extending obliquely to the bore (18).

23. Welding torch as claimed in claim 3, **characterised in that** the adapter (17) has a bore (18) and another part with an obliquely extending face (67) is arranged in front of the bore (18).

24. Welding torch as claimed in claim 2 or 3, **characterised in that** the bore (18) of the adapter (17) is positioned with its central axis (20) in alignment with the longitudinal central axis (21) running through the centre of the welding torch (1).

25. Welding torch as claimed in claim 2, 3 or 24, **characterised in that** the bore (18) of the adapter (17) extends across a part region (22) of the adapter (17), an internal thread (23) being provided across the entire or a part region of the bore (18) into which the female contact (24) can be screwed.

## Revendications

1. Chalumeau soudeur avec une douille de contact et un dispositif d'amenée pour un fil d'apport, où le dispositif d'amenée s'étend jusque dans la zone de la douille de contact et dévie le fil d'apport transversalement à un perçage de la douille de contact, **caractérisé en ce qu'**un axe de symétrie (31) s'étendant dans le centre du dispositif d'amenée (29) respectivement d'un dispositif de guidage (36) disposé dans le dispositif d'amenée (29) est disposé parallèlement à un axe médian longitudinal (21) s'étendant dans le centre du chalumeau soudeur (1), et pour l'introduction du fil d'apport (6) dans la douille de contact (24), le dispositif d'amenée (29) respectivement le dispositif de guidage (36) est déformé en biais à l'axe médian (27) d'un perçage (25) de la douille de contact (24) en direction de l'axe médian longitudinal (21).

2. Chalumeau soudeur selon la revendication 1, **caractérisé en ce que** la douille de contact (24) et le dispositif d'amenée (29) sont retenus l'un à l'autre par une pièce de transition (17).

3. Chalumeau soudeur selon la revendication 2, **caractérisé en ce que** la pièce de transition (17) présente deux perçages (18, 19).

4. Chalumeau soudeur selon l'une ou plusieurs des revendications 1 à 3, **caractérisé en ce que** la douille de contact (24) est reliée par exemple par un filetage intérieur (23) ou une fermeture à enclenchement avec le perçage (18) de la pièce de transition (17).

5. Chalumeau soudeur selon l'une ou plusieurs des revendications 1 à 4, **caractérisé en ce que** le dispositif d'amenée (29) est disposé au voisinage du perçage (19).

6. Chalumeau soudeur selon l'une ou plusieurs des revendications 1 à 5, **caractérisé en ce qu'**un axe médian (27) s'étendant au milieu du perçage (25) de la douille de contact (24) est disposé en alignement avec l'axe médian longitudinal (21).

7. Chalumeau soudeur selon l'une ou plusieurs des revendications 1 à 6, **caractérisé en ce qu'**un dispositif de guidage (36) est disposé dans le dispositif d'amenée (29).

8. Chalumeau soudeur selon la revendication 7, **caractérisé en ce que** le dispositif de guidage (36) est réalisé par exemple à partir d'un ressort hélicoïdal ou d'un matériau synthétique élastique respectivement en un matériau ayant des caractéristiques élastiques.

9. Chalumeau soudeur selon la revendication 7 ou 8, **caractérisé en ce que** le dispositif de guidage (36) a un diamètre extérieur qui est plus petit qu'un diamètre intérieur (38) du dispositif d'amenée (29).

10. Chalumeau soudeur selon l'une ou plusieurs des revendications 7 à 9, **caractérisé en ce que** le dispositif de guidage (36) présente un diamètre intérieur qui est au moins aussi grand ou plus grand que le diamètre extérieur respectivement l'enveloppe extérieure (37) du fil d'apport (6).

11. Chalumeau soudeur selon l'une ou plusieurs des revendications 1 à 10, **caractérisé en ce que** le dispositif d'amenée (29) respectivement le dispositif de guidage (36) fait saillie dans le perçage (19) de la pièce de transition (17).

12. Chalumeau soudeur selon l'une ou plusieurs des revendications 1 à 11, **caractérisé en ce que** le dispositif d'amenée (29) est coudé selon un angle (35) en direction de l'axe médian longitudinal (21) du chalumeau soudeur (1).

13. Chalumeau soudeur selon l'une ou plusieurs des revendications 1 à 12, **caractérisé en ce que** le dispositif d'amenée (29) vient en contact avec le perçage (18) de la pièce de transition (17).

14. Chalumeau soudeur selon l'une ou plusieurs des revendications 1 à 13, **caractérisé en ce que** du fait de la disposition angulaire du dispositif d'amenée (29) au voisinage de la pièce de transition (17), le fil d'apport (6) est dévié de façon que par l'enveloppe extérieure (37) du fil d'apport (6) dans le perçage (25) de la douille de contact (24), au moins une ou plusieurs faces de contact définies (43, 44) soient formées, et **en ce qu'**une ligne droite (46) reliant les deux faces de contact (43, 44) présente un angle (47) à l'axe médian longitudinal (21) s'étendant au milieu du chalumeau soudeur (1).

15. Chalumeau soudeur selon l'une ou plusieurs des revendications 1 à 10, **caractérisé en ce que** le dispositif d'amenée (29) et/ou le dispositif de guidage (36) se termine lors de l'entrée dans le perçage (19) de la pièce de transition (17).

16. Chalumeau soudeur selon l'une ou plusieurs des revendications 2, 3, **caractérisé en ce que** le perçage (19) de la pièce de transition (17) est fermé par une plaque de fermeture (52).

17. Chalumeau soudeur selon la revendication 16, **caractérisé en ce que** la plaque de fermeture (52) présente des perçages (53).

18. Chalumeau soudeur selon l'une ou plusieurs des revendications 16 ou 17, **caractérisé en ce que** le fil d'apport (6) repose librement entre la plaque de fermeture (52) et le perçage (25) de la douille de contact (24) dans le perçage (19) de la pièce de transition (17).

19. Chalumeau soudeur selon l'une ou plusieurs des revendications 15 à 18, **caractérisé en ce que** du fait de la disposition décalée du dispositif d'amenée (29) respectivement du dispositif de guidage (36) et du perçage (25) de la douille de contact (24), le fil d'apport (6) au voisinage du perçage (19) de la pièce de transition (17) s'étend suivant un angle à l'axe médian longitudinal (21) du chalumeau soudeur (1) de façon que se forment au voisinage du perçage (25) de la douille de contact (24) au moins une ou plusieurs faces de contact définies (43, 44) et **en ce que** la droite de liaison qui en résulte (46) présente un angle (47) à l'axe médian longitudinal (21).

20. Chalumeau soudeur selon la revendication 1, **caractérisé en ce qu'**il est disposé entre le dispositif d'amenée (29) respectivement le dispositif de guidage (36) et le perçage (19) de la pièce de transition (17) une pièce intermédiaire (63).

21. Chalumeau soudeur selon la revendication 3, **caractérisé en ce que** le perçage (19) de la pièce de transition (17) présente un angle (65) au perçage (18) de la pièce de transition (17), et **en ce que** l'axe médian (20) du perçage (18) est disposé en alignement avec l'axe médian longitudinal (21).

22. Chalumeau soudeur selon la revendication 3, **caractérisé en ce que** la pièce de transition (17) est réalisée avec le perçage (18) et la face (67) s'étendant selon un angle au perçage (18).

23. Chalumeau soudeur selon la revendication 3, **caractérisé en ce que** la pièce de transition (17) présente le perçage (18), et qu'il est disposé en amont du perçage (18) une autre partie avec la face (67) s'étendant selon un angle.

24. Chalumeau soudeur selon la revendication 2 ou 3, **caractérisé en ce que** le perçage (18) de la pièce de transition (17) est positionné avec son axe médian (20) en alignement avec l'axe médian longitudinal (21) qui s'étend dans le centre du chalumeau soudeur (1).

25. Chalumeau soudeur selon la revendication 2, 3 ou 24, **caractérisé en ce que** le perçage (18) de la pièce de transition (17) s'étend sur une zone partielle (22) de la pièce de transition (17), où est ménagé dans le perçage (18), entièrement ou sur une zone partielle, un filetage intérieur (23) dans lequel la douille de contact (24) peut être vissée.
